(19) Europäisches Patentamt
European Patent Office
Office européen des brevets

(11) Publication number: **0 270 033 A2**

# (12) EUROPEAN PATENT APPLICATION

(21) Application number: 87117601.2

(51) Int. Cl.[4]: C08G 18/42

(22) Date of filing: 27.11.87

(30) Priority: 28.11.86 IT 2249486

(43) Date of publication of application:
08.06.88 Bulletin 88/23

(84) Designated Contracting States:
AT BE CH DE ES FR GB LI NL SE

(71) Applicant: MONTEDIPE S.p.A.
31, Foro Buonaparte
Milan(IT)

(72) Inventor: Moroni, Renato, Dr.
6/7, vei dei Tigli
I-20020 Arese Milano(IT)
Inventor: Brocci, Marino
78/B, via Gramsci
I-21013 Gallarate Milano(IT)

(74) Representative: Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
D-8000 München 40(DE)

## (54) Polyesterpolyols and use thereof in the production of polyurethane foams.

(57) There are disclosed halogen and/or phosphorus containing polyesterpolyols obtained by esterification and transesterification of the residues from the process for producing dimethyl terephthalate with a polyol, at least 5% by weight of said polyol being constituted by at least one glycol having the general formula

HO - R - OH

wherein R is a halogen and/or phosphorus containing aliphatic, aromatic, cycloaliphatic or alkyl-aromatic radical.

Said halogen and phosphorus containing polyesterpolyols may be used for the production of flame resistant polyurethane foams.

EP 0 270 033 A2

Xerox Copy Centre

# POLYESTERPOLYOLS AND USE THEREOF IN THE PRODUCTION OF POLYURETHANE FOAMS

The present invention relates to polyesterpolyols produced from the residues of the process for producing dimethyl terephthalate (hereinafter called DMT).

More particularly, the present invention relates to liquid polyesterpolyols which are obtained by esterification and transesterification reactions of the residues from the process for producing DMT with particular polyols and which are particularly suitable to be used in the production of polyurethane foams.

It is known to prepare polyurethane foams by the reaction of a polyisocyanate, a polyol and a blowing agent, in the presence of a catalyst.

For the preparation of said polyurethane foams, particularly of the rigid ones, various polyols have been proposed.

For example, US-A-2,965,615 suggests the use of co-polymers of alkenylsubstituted aromatic compounds, such as styrene and ethylenically unsaturated monohydric alcohols, such as allyl alcohol, as useful polyols in polyurethane production.

US-A-3,647,759 suggests to produce polyurethane foams by reaction of a polyisocyanate with a polyesterpolyol obtained by transesterification of the residues from the process for producing DMT with ethylene glycol.

The polyurethane foams thus obtained are useful in the insulation sector as thermally insulating materials, structural reinforcement etc.

One factor limiting the utilization of such polyurethane foams is their flammability.

Numerous attempts have been made at overcoming this draw-back of the polyurethane foams. One known method consists in adding to the reaction composition fire-retardant agents. Said agents may be either of the non-reactive type which is incorporated by a mere mechanical mixing, or of the reactive type which becomes chemicallly linked to the polymer chain.

The first type of the fire-retardant agents comprises tris (chloroethyl) phosphate, tris (2,3-dibromopropyl) phosphate, ammonium phosphate, antimony trioxide, calcium carbonate, magnesium carbonate, etc.

Examples of fire-retardant agents which become linked to the polymer chain are phosphorus containing or chlorinated polyols.

All the above mentioned materials are effective as fire retardants. However, they are disadvantageous in that they adversely affect the mechanical and physical properties of the resulting foam, as well as the processability of the obtained product.

Moreover, the incorporation of certain fire-retardant materials in the reaction mixture containing the polyisocyanate, results in toxic combustion products.

Another method for imparting flame-resistant properties to the polyurethane foams is to produce formulations which are derived from isocyanurate structures.

Also this method, however, has its disadvantages since high levels or quantities of isocyanurate as required in order to impart the derived flame-resistant properties to the polyurethane foams.

These high levels or quantities of isocyanurate lead to the production of friable product, specifically on the surface, which do not have the required compressive strength and which show weak adhesion to the support.

It has now been found that the presence .in the polyurethane chain of units derived from the transesterification and esterification of the residues from the process for producing DMT with a glycol containing halogen and/or phosphorus radicals leads to the production of polyurethane foams having the desired flame-resistant properties without any negative effect on all the other physico-mechanical properties of the resulting product.

Therefore, subject matter of the present invention are halogen and/or phosphorus containing polyesterpolyols obtained by the esterification and transesterification of the residues from the process for producing DMT with a polyol which comprises at least 5% by weight, preferably at least 10% by weight, of at least one glycol having the general formula:

HO - R - OH (I)

wherein R is a halogen and/or phosphorus containing alipahtic, aromatic, cycloaliphatic or alkyl-aromatic radical.

Furthermore, the present invention provides polyurethane foams comprising the reaction product obtained by reacting, in the presence of a blowing agent, an organic polyisocyanate with a halogen and/or phosphorus containing polyesterpolyol obtained by esterification and transesterification of the residues from the process for producing DMT with a polyol, said polyol comprising at least 5% by weight of a glycol

having the formula:

HO - R - OH (I)

wherein R has the above-mentioned meanings.

In the preparation of the polyesterpolyols of the present invention, the amount of the halogen and/or phosphorus containing glycol of general formula (I) is not critical, although amounts such as to result in a halogen and/or phosphorus content of from 2 to 20% by weight, based on the polyesterpolyol, are preferred.

According to a preferred embodiment of the present invention, the glycols of general formula (I) may be selected from those in which R is a halogenated aliphatic radical containing from 2 to 20, preferably 2 to 12, carbon atoms, a halogenated alkyl-aromatic radical containing from 7 to 30, preferably 7 to 18, carbon atoms, a halogen-containing polyester, an alkyl phosphate radical, an alkyl phosphonate radical, or an alkyl phosphite radical or a mixture thereof.

In the phosphorus containing radicals just mentioned the alkyl group preferably has from 1 to 20, particularly from 1 to 12, carbon atoms.

As halogen, chlorine or bromine are preferably used.

The term "polyol", whenever used in the present specification and in the claims, means an aliphatic glycol having from 2 to 12 carbon atoms or a cycloaliphatic glycol having from 3 to 12, particularly 5 to 8, carbon atoms.

The alkyl or cycloalkyl group of the above glycols may contain one or more hetero atoms, particularly oxygen and nitrogen atoms. Examples of such glycols are ethylene glycol; diethylene glycol; propylene glycol; 1,4-butandiol: neopentylene glycol, 1,6-hexanediol; 2-methyl-hexane-1,6-diol; dodecane-1,12-diol; decane-1,10-diol; cyclohexane-diol; 1,4-xylylene-glycol; oxodiethylene glycol; oxodipropylene glycol etc; and a polyoxyethylene glycol or a polyoxypropylene glycol having a molecular weight of from 150 to 500.

The term "residue" defined above refers to the purged residues which are obtained during the manufacture of DMT starting from p -xylene.

As is known, DMT is produced by a continuous process which consists in oxidizing the p-xylene to p-toluic acid, in esterifying the p -toluic acid with methanol to form methyl p-toluate; in air oxidizing the methyl p-toluate to the monomethyl ester of terephthalic acid, and in esterifying the monomethyl ester with methanol to form DMT. The esterification product is then distilled to give a distillate comprising DMT and methyl p -toluate, and an esterified-oxidized residue. The DMT is recovered and the methyl p-toluate is returned to the oxidation step.

The esterified-oxidized residue (hereinafter called DMT process residue) is a tar-like solid material, composed of a highly complex mixture comprising high molecular weight monomeric and polymeric constituents, methyl and benzyl esters of biphenyl and triphenyl dicarboxylic and tricarboxylic acids, and optionally catalysts.

A typical example of a DMT process residue has the following properties:

| | |
|---|---|
| - Color | : Dark brown |
| - Softening Point | : 60 - 100°C |
| - Acid Number (according to ASTM D 1639 Standard) | : 10-40 |
| - Methoxy groups ($-COO\ CH_3$) | : 7-30% by weight |
| - DMT | : 0-20% by weight |
| - Saponification Number (according to Anal. Chem. 23,1126 (1951)) | : 375-500 |

US-A-3,647,759, the disclosure and teaching of which are incorporated herein and are an integral part of the present description, describes in detail the above residues and their properties, as well as the transesterification procedure using ethylene glycol.

The polyesterpolyol of the present invention is obtained by reacting the above DMT process residues with an excess of a polyol containing one or several glycols of formula (I) above. The reaction is preferably

carried out under atmospheric or subatmospheric pressure.

The amount of polyol, containing one or more glycols of formula (I), is not critical, provided that the quantity is sufficient to provide more than 1 mole per equivalent of available acid and methyl-ester groups present in the residue. Preferably, from 1.25 to 10 moles, and more preferably from 1.4 to 4 moles, are recommended per equivalent of available acid and methyl ester groups. Larger amounts may also be used, but since additional advantages are generally not achieved thereby, amounts greater than 10 moles per equivalent of acid and methyl-ester are not recommended.

The reaction between the residue and the polyol results in transesterification and esterification of the methyl ester and acid components, respectively of the residue, to provide a polyester having hydroxyl group termination at one end.

The DMT process residue may in some cases contain one or more catalysts which were used to promote the oxidation and esterification reaction in the DMT process.

In cases where the catalyst is present in a quantity sufficient for carrying out the esterification and transesterification reactions, no addition of a catalyst is required; if not so, a catalytic quantity of a conventional transesterification catalyst, such as zinc acetate, calcium acetate, magnesium acetate, tin salts or esters, titanium esters and the like, is preferably added to the mixture.

The temperature range in which the esterification and transesterification reactions of the DMT process residue are effected preferably is from 100° to 250°C; however, lower or higher temperatures may be used.

The period of time sufficient for completing the reaction ranges from 2 to 20 hours and preferably from 3 to 10 hours. Of course, the higher the reaction temperature the shorter the time required for a substantially complete reaction.

Generally, the reaction is performed in the absence of other liquids or reaction media. While the reaction is taking place, methanol and water are formed which are removed from the reaction medium. The polyols which comprise the glycols of formula (I), are optionally removed along with the methanol, and are preferably returned to the reaction medium.

Upon completion of the reaction, the reaction product, the polyesterpolyol, is recovered and, if desired, unreacted excess polyol is removed from the reaction mixture, as for example by vacuum distillation.

Usually, it is preferred to retain a slight excess of polyol in the polyesterpolyol to modify the viscosity and provide additional hydroxyl functional groups. Generally, the excess polyol does not account for more than 25% by weight.

The reaction product, under standard conditions, is a liquid polyesterpolyol containing phosphorus and/or halogen groups and having the following properties:

State: liquid
Viscosity at 25°C : 5,000 - 40,000 mPa · s
Color : dark brown
Acid number : 1 - 10
Hydroxyl number (mg/g) : 200 - 600
Methoxy groups -COO $CH_3$ : 0 - 5% by weight

Examples of halogen or phosphorus containing glycols, having formula (I), which may be used for the esterification and transesterification of the DMT process residues, are:

a) halogen containing alkyl glycols, preferably containing 2 to 12 carbon atoms, such as dichloro-ethylene glycol; dibromo-ethylene glycol; 2,3-dichloro-butane-1,4-diol; 2,3-dibromo-butane-1,4-diol; 2,3-dibromo-propane-1,3-diol; 2,3-dichloro-propane-1,3-diol; dibromo-or dichloro-neopentyl glycol and the like;

b) diester derivates of the above halogen containing alkyl glycols, such as dibromo neopentyl-glycol adipate of formula:

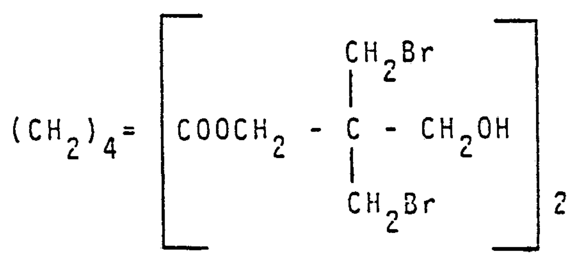

c) halogen containing aryl glycols, such as tetrabromo bisphenol A of formula:

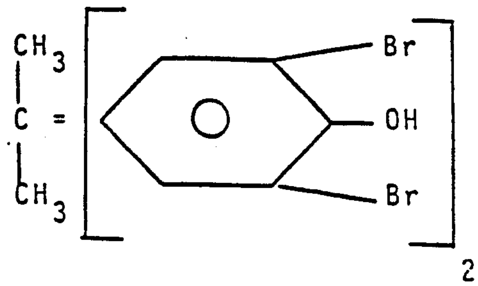

d) oxyalkylene derivatives of halogen containing aryl glycols, such as bis (2-hydroxyethyl-ether) of tetra-bromo-bisphenol A of the formula:

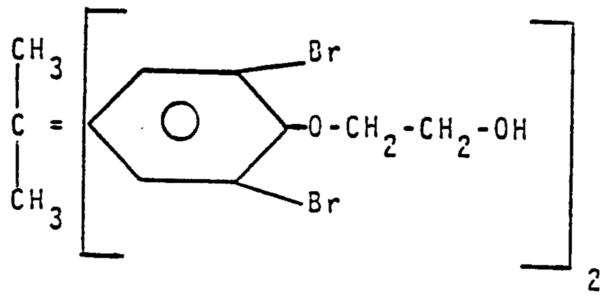

e) halogen and phosphorus containing oxyalkylene derivatives, such as bis (dipropylene-glycol-hydroxy-2,2,2-trichloroethylphosphate) of formula:

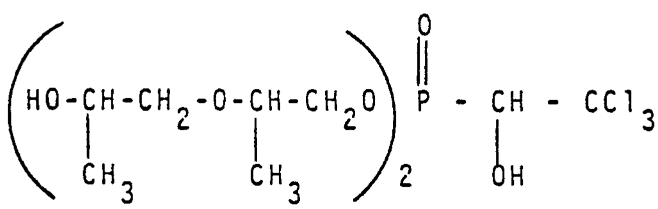

f) oxyalkylene derivatives of pyrophosphoric or phosphoric acid, such as bis-2-hydroxy-ethyl-propyl-pyrophosphate of formula:

$$HO\text{-}CH_2\text{-}CH_2\text{-}O\text{-}PO_2\text{-}O\text{-}CH_2\text{-}\underset{\displaystyle CH_3}{\underset{|}{CH}}\ O\text{-}PO_2\text{-}O\text{-}CH_2\text{-}CH_2\text{-}OH$$

g) oxyalkylene derivatives of phosphoric acid, such as diethyl N,N-bis-2-hydroxy-ethyl-amine-ethyl phosphonate, of formula:

$$(CH_3\text{-}CH_2\text{-}O)_2\text{-}\overset{\displaystyle O}{\overset{||}{P}}\text{-}CH_2\text{-}N=(CH_2\ CH_2\text{-}OH)_2$$

(sold under the trade mark Fyrol 6)

h) oxyalkylene derivatives of aryl dicarboxylic acids, such as diesters based on tetrabromophthalic anhydride, propylene oxide and diethylene glycol, of formula:

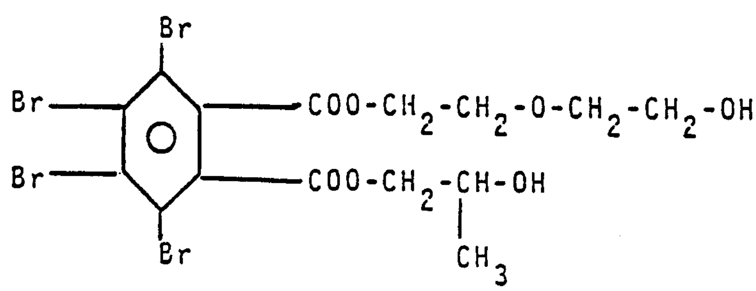

i) diesters based on chlorendic acid (MET) and diethylene glycol, e.g. of formula:

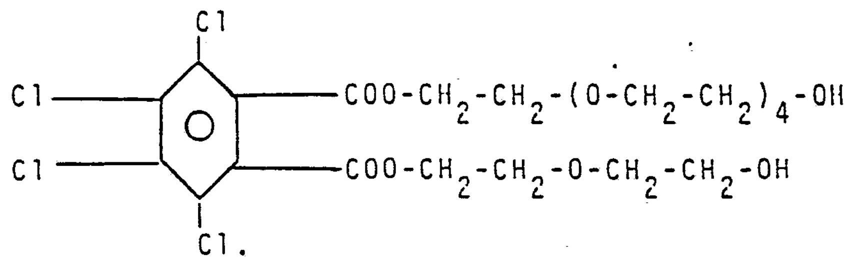

The halogen and/or phosphorus containing polyesterpolyols of the present invention may be used alone or in mixture with conventional polyols to prepare polyurethane foams in one step by reacting all the ingredients together at once, according to the one-shot process or by the prepolymer method.

The conventional polyols may be the ones mentioned above or polyesterpolyols obtained by the reaction of the DMT process residues with a glycol, as described in US-A-3,647,759 and 4,346,229, the disclosures of which are integral part of the present description.

One particular type of polyurethane foam composition wherein halogen and/or phosphorus containing polyesterpolyols of the present invention are used, is the following one:

| COMPONENTS | PARTS % by weight |
|---|---|
| Component A<br>Polyisocyanate | A quantity such that the NCO/OH ratio is from 0.7 to 3 and preferably from 0.9 to 1.1 |
| Component B | |
| Halogen and/or phosphorus containing polyesterpolyol, alone or mixed with other polyols | 94.5 - 46 |
| Catalyst | 0.5 - 2 |
| Blowing agent | 4 - 50 |
| Surfactant | 1 - 2 |
| | 100 |

In the production of the polyurethane foam of the present invention, any organic polyisocyanate, particularly diisocyanate, or reactive -NCO group containing compound can be employed. Prepolymers having reactive isocyanate or -NCO groups can also be employed.

For illustrative purposes, the following compounds may be mentioned: methylene-diphenyl-diisocyanate

and its 2,4'-and 4,4'-isomers ans mixtures thereof, and its higher oligomers such as poly-phenyl-methane-polyisocyanate, generally called polymeric MDI; m-and p-phenylene diisocyanate; chlorophenylene diisocyanate; alpha, alpha'-xylylene diisocyanate; 2,4-and 2,6-toluene diisocyanate and mixtures thereof; toluidine diisocyanate; hexamethylene diisocyanate; 1,5-naphthalene diisocyanate; methylene-bis (cyclohexyl-isocyanate) and their 4,4'-and 2,4'-isomers and mixtures thereof.

The preferred polyisocyanate is polyphenyl-methane-polyisocyanate.

Catalysts may be generally used to accelerate the reaction between the polyisocyanate and the glycols.

All the catalysts known in the art which catalyze the reaction between the isocyanic group and the reactive hydrogen containing compounds may be used. A detailed list of catalysts is disclosed, for example, in US-A-2,620,516; 2,621,166 and 2,729,618.

Suitable blowing agents are e.g. water, the fluoro-chlorocarbons and hydrocarbons which boil at a temperature in the range of from about -30°C to about 50°C, such as, for example, trichlorofluoromethane, trichlorofluoroethane, dichlorofluoromethane, monochloroethane, monochlorofluoroethane, difluoromonochloroethane, difluorodichloroethane, pentane and mixtures thereof.

Suitable surfactants are e.g. the silicones, such as, for example, DC 193 sold and manufactured by Dow Corning.

The polyurethanes, containing in the polymeric chain units derived from the transesterification and esterification of the DMT process residues with a halogen and/or phosphorus containing glycol, have a high flame resistance, at least B2, good physical and mechanical properties such as dimensional stability of the foams, show no friability and aging, and possess good insulating properties.

The following examples serve to illustrate the present invention without being, however, a limitation thereof.

## Example 1

2,000 g of DMT process residue having the following properties:

-Molecular weight = 325
-Melting point = 75 - 80°C
-Acid Number = 28
-Saponification Number = 466
-Methoxy groups = 18.7 %
-DMT = 10 %

were introduced into a reactor equipped with a stirrer and a fractional distillation column, and heated until fluid enough to be stirred readily.

While stirring,

-380 g of dibromo-neopentyl glycol;
- 4 g of dibutyl titanate and
-2,000 g of diethylene glycol,

were added.

The resulting mixture was kept in a nitrogen stream under vacuum up to 6 mm Hg for 12 hours at 130-200°C, while a distillate consisting of methanol and excess diethylene glycol was removed.

After 12 hours of reaction, the reaction product had an acid number of 1 and a methoxy group content of 0.32%.

The heating was terminated and the resulting mixture was cooled.

The resinous product had a viscosity of 9,000 mPa • s, a hydroxyl number of 400 mg per 1 g of substance, a diethylene glycol content of 15% and a bromine content of 5% by weight.

## Example 2

This example illustrates the use of the product obtained in Example 1 in the production of rigid polyurethane foams.

100 parts by weight of the resinous product of Example 1 were mixed, at room temperature, with:

-1.4 parts by weight of a silicon surfactant (DC 193 sold by Dow Corning);
-4 parts by weight of glycerol, as cross-linking agent;
-1.5 parts by weight of dimethylcyclohexylamine, as catalyst;
-1.2 parts by weight of water; and

-30 parts by weight of trichlorofluoromethane.

100 parts by weight of polyphenylmethane polyisocyanate (produced and sold by Montedipe S.p.A. under the trade mark TEDIMON 31) were added to the uniform mixture, the NCO/OH ratio was 1.06.

The resulting mixture was stirred vigorously for 15 seconds and left to foam for 60 seconds. A rigid polyurethane foam was obtained having the properties reported in the following table.

Example 3

The procedure of Example 1 was repeated except that dibromoneopentyl glycol was replaced by an equivalent quantity of diethylene glycol.

The obtained polyesterpolyol had a viscosity of 9,000 mPa · s and a hydroxyl number of 390 mg for 1 g of substance.

100 parts by weight of the above obtained polyesterpolyol were mixed with:

-1.4 parts by weight of a silicon surfactant (DC 193 sold by Dow Corning);

-4 parts by weight of glycerol, as cross-linking agent;

-1.5 parts by weight of dimethylcyclohexylamine, as catalyst;

-1.2 parts by weight of water, and

-30 parts by weight of trichlorofluoromethane.

100 parts by weight of polyphenyl-methane-polyisocyanate were added to the above mixture and a rigid polyurethane foam was prepared from the resulting mixture by following the procedure of Example 2.

The properties of the obtained polyurethane foam are listed in the following table.

| PROPERTIES | METHOD | UNIT | EX.2 | EX.3 |
|---|---|---|---|---|
| - DENSITY | ASTM D1622 | g/1 | 26 | 26 |
| - CLOSED CELLS | ASTM D2856 | % | 86 | 88 |
| - COMPRESSIVE STRENGTH | | | | |
| a) Parallel to direction of rise | ASTM D1621 | $kg/cm^2$ | 1 | 0.9 |
| b) Perpendicular to direction of rise | ASTM D1621 | $kg/cm^2$ | 0.7 | 0.6 |
| - HEAT CONDUCTIVITY | ASTM C177 | W/m°C | 0.015 | 0.016 |
| - FLAMMABILITY RATING | DIN 4102 | | B2 | B3 |

**Claims**

1. Polyesterpolyols obtained by esterification and transesterification of DMT process residues with a polyol comprising at least 5% by weight of at least one glycol having general formula:

HO - R - OH (I)

wherein R is a halogen and/or phosphorus containing aliphatic, aromatic, cycloaliphatic or alkyl-aromatic radical.

2. Polyesterpolyol according to claim 1, wherein the glycol of formula (I) is selected from those wherein R is a halogenated aliphatic radical having from 2 to 20 carbon atoms, a halogenated alkyl-aromatic radical having from 7 to 30 carbon atoms, a halogen containing polyether radical, a halogen containing polyester radical, an alkyl-phosphate radical, an alkyl-phosphonate radical, an alkyl phosphite radical and mixtures thereof.

3. Polyesterpolyols according to claim 1 or 2, wherein the glycols of formula (I) are selected from the group of: halogen containing alkyl glycols, diester derivatives of the halogen containing alkyl glycols, halogen containing aryl glycols, oxyalkylene derivatives of the halogen containing aryl glycols, halogen or phosphorus containing oxyalkyl derivatives, oxyalkylene derivatives of pyrophosphoric acid or of phosphoric acid, oxyalkylene derivatives of phosphonic acids and oxyalkylene derivatives of aryl dicarboxylic acids.

4. Polyesterpolyols according to any of the preceding claims, wherein the amount of glycol having formula (I) is such as to result in a halogen and/or phosphorus content of from 2 to 20% by weight, based on the polyesterpolyol.

5. Polyesterpolyols according to any of the preceding claims, wherein the halogen is chlorine and/or bromine.

6. Polyesterpolyols according to any of the preceding claims, wherein the polyol is selected from aliphatic or cycloaliphatic glycols having from 2 to 12 carbon atoms and polyoxyethylene glycols and polyoxypropylene glycols having a molecular weight of from 150 to 500.

7. A process for the production of the polyesterpolyols of the preceding claims, characterized in that it comprises reacting, under atmospheric or subatmospheric pressure and at a temperature of from 100° to 250°C, the DMT process residues with an excess of a polyol, at least 5% by weight thereof being constituted by one or more glycols having general formula (I) as defined in claim 1.

8. Use of the polyesterpolyols of claims 1 to 6 for the preparation of polyurethane foams.

9. Flame-resistant polyurethane foams comprising the reaction product obtained by reacting an organic polyisocyanate with a halogen and/or phosphorus containing polyesterpolyol obtained by esterification and transesterification of the DMT process residues with a polyol at least 5% by weight of which is constituted by a glycol having the general formula (I) defined in claim 1.